Europäisches Patentamt

European Patent Office

Office européen des brevets

(19)

(11) Publication number: **0 076 115**
**A2**

(12) # EUROPEAN PATENT APPLICATION

(21) Application number: 82305047.1

(22) Date of filing: 24.09.82

(51) Int. Cl.³: **A 23 L 1/22**
**A 23 L 1/236**

(30) Priority: 25.09.81 US 305425

(43) Date of publication of application:
06.04.83 Bulletin 83'14

(84) Designated Contracting States:
BE CH DE FR GB LI SE

(71) Applicant: WARNER-LAMBERT COMPANY
201 Tabor Road
Morris Plains New Jersey 07950(US)

(72) Inventor: Glass, Michael
156-11 Aguilar Avenue
Flushing, NY-11367(US)

(72) Inventor: Corsello, Vincent
98 Evans Avenue
Albertson, NY-11507(US)

(74) Representative: Jones, Michael Raymond et al,
HASELTINE LAKE & CO. Hazlitt House 28 Southampton
Buildings Chancery Lane
London WC2A 1AT(GB)

(54) Flavour composites and their preparation.

(57) A flavour composite is prepared from xylitol and a flavour material, by melting the xylitol, heating the resulting melt, thereafter cooling the melt and, under turbulent conditions, adding the flavour. The xylitol forms a crystalline lattice that retains the flavour and, in addition to increasing flavour shelf life, enhances flavour sensation by offering a cooling taste effect. The present flavour composite may be prepared as sugar-free candies, or may be reduced to particle sizes appropriate for incorporation into comestible products such as chewing gums, and may be utilized either alone or in combination with the same or different flavours in alternative forms.

EP 0 076 115 A2

Croydon Printing Company Ltd

FLAVOUR COMPOSITES AND THEIR PREPARATION

This invention relates to flavour composites, useful inter alia for confectionery, such as sweets or candy, and chewing gum, and to a method for the preparation of such flavour composites.

While a wide variety of flavours have been formulated for incorporation into, for example, candies and chewing gums, one of the problems attending the development of these products has been the tendency of the flavour to diminish rapidly in intensity, and thereafter disappear within a relatively short period of time. This deficiency is most noteworthy in the instance of chewing gums, as flavour loss frequently occurs within the first four to five minutes of chewing. A similar problem is observed where the product is stored for a period of time between manufacture and consumption. The flavours likewise tend to exhibit undesirably limited shelf stability and, in some cases, may diminish to an unacceptable low level within one month after storage.

Several efforts have been made to remedy the aforenoted deficiencies by the preparation of flavours in encapsulated forms. Specifically, U.S. Patent Specifications Nos. 3,795,744 and 3,826,847 disclose the idea of encapsulating a variety of flavours by homogeneously dispersing the flavours in a solution of water-soluble high molecular weight compounds, such as polyvinyl esters, cellulose derivatives, and the like. This approach possesses certain drawbacks in that the high molecular weight material must be combined with plasticizers and solvents, before the addition of the flavour, and precipitation of the encapsulated flavour beads is accomplished by the addition of a hydrocarbon solvent such as hexane, which must be thereafter volatized off. Thus, in addition to introducing undesirable compounds, the preparation is unduly complex.

Further activity in the area of encapsulation of food additives has centred around efforts to prolong the stability of the artificial dipeptide sweetener known commonly as APM. In particular, U.S. Patent Specification No. 3,928,633 proposes to encapsulate APM by dispersion within a material capable of being processed by hot melt techniques, and thereafter cooled to form an amorphous matrix containing the APM. The specification discloses, as one of the acceptable hot melt ingredients, polyhydric alcohols such as sorbitol. While this disclosure may be relevant to the encapsulation of APM, the temperatures at which the procedure operates are too high for the encapsulation of many desirable flavours, which would be lost by volatization if they were incorporated into the encapsulant matrix. Sorbitol itself congeals at a temperature that it too high to permit it to operate individually as an effective encapsulant. Also, the chemistry of APM differs from that of food flavours, and analogies in operation and effect of encapsulants may not be properly drawn.

A need therefore exists to develop a method and associated product which extends the shelf life of a wide variety of flavourings without introducing undesired synthetic compounds to the ultimate food product, and which may be accomplished with a minimum expenditure of materials, energy and time.

According to one aspect of the invention there is provided a flavour composite comprising xylitol and at least one flavour.

Preferably, the xylitol is prepared in solid, crystalline form, and contains the flavour. The flavour may be either solid or liquid in form, and may be present in the flavour composite in an amount by weight of up to about 30%, and preferably from about 0.1% to about 10%.

According to another aspect of the invention there is provided a method of preparing a flavour composite which method comprises:

a) heating a quantity of xylitol to a temperature greater than 150°C;

b) cooling said xylitol to a temperature of about 80°C;

c) adding to the cooled xylitol of Step b) at least one flavour; and

d) recovering said flavour composite.

In the method of the invention, the xylitol proceeds to crystallize and solidify after the addition of the flavour(s) is complete, and the resulting flavour composite can quickly be recovered in, for example, sheet, droplet or particulate form.

Xylitol is a well known ingredient in comestible products, and generally serves as an artificial sweetener, as well as a bulking agent in chewing gums. Xylitol may be derived by the reduction of the wood sugar xylose, in a manner well known to those skilled in the art.

The flavours useful in the present invention are all of the flavours well known for use in food applications. Thus, such flavours may include those derived from essential oils, as well as those flavours characterized as either natural or artificial fruit flavours. Also, the flavours within the scope of the present invention would include bean-derived flavours, wine-derived flavours and pungent materials known commonly as spices.

More particularly, flavours useful in the present invention include essential oils, such as cinnamon, spearmint, peppermint, birch, anise and the like; natural fruit flavours derived from the essence of fruits, such as apple, pear, peach, strawberry, cherry, apricot, orange, watermelon, banana and the like; bean-derived flavours, such as coffee, cocoa and the like; wine-derived flavours such as curacao zin and the like; and pungent materials such as affinin, pepper, mustard and the like.

The flavours may be prepared individually, or, where appropriate, may be prepared in combination. Thus, the above flavours may be individually incorporated within a xylitol matrix, and may thereafter be granulated and mixed in combination with each other to impart specific flavour effects to food products.

The amount of flavour incorporated into the xylitol matrix may vary widely, depending in part, upon the thermal properties of the individual flavour. For example, in the instance where the flavour is relatively stable at the temperature at which it is mixed with the xylitol, as explained later on herein, a greater quantity may be added to form the flavour composite. Conversely, if the flavour is unstable and tends to volatize easily at the temperature at which the flavour is mixed with xylitol, the amount of flavour within the resulting composite may be less. The foregoing parameters are illustrative only, as it may be possible to incorporate equal or greater amounts of a given flavour regardless of its volatility.

In general, the flavour composite may contain up to about 30% or more of flavour, but preferably contains up to about 20%, and more particularly from 0.1% to 10% of flavour therein. Notwithstanding this, the flavour content of the flavour composite may vary, and the invention is not limited strictly to the foregoing amounts.

Initially, i.e. at room temperature, xylitol exists as a solid and must be liquified by heating to about 80°C. If heating is suspended at this point, the xylitol quickly crystallizes, and this material is somewhat difficult to utilize in the preparation of the flavour composite. Accordingly, the liquid xylitol is heated further to a temperature in excess of 150°C, to form an essentially stable liquid. Preferably, the xylitol may be heated to a temperature ranging from about 150°C to about 230°C, where a quantity of water vapour evolution is observed. The higher temperature, however, does not cause the xylitol to boil.

After the first heating step is completed, and the xylitol has been riased in temperature to within the range set forth above, it may then be cooled to a temperature of the order of 80°C. As noted earlier, this latter temperature represents the approximate solidification point for xylitol, and is the point at which the flavour is desirably added. A feature of the present method is that the addition of flavour to xylitol within a temperature range encompassing 80°C, may be accomplished with a minimum loss of flavour by volatization or "flash off". Thus, greater quantities of flavour may be added and incorporated into the composite.

The addition of the flavour at this point is preferably conducted rapidly and under turbulent conditions. Thus, the xylitol should be agitated during the entire time that the flavour is added thereto. Agitation of the xylitol promotes uniform dispersion of the flavour therein, and inhibits the commencement of solidification of the xylitol, so that greater quantities of flavour may be incorporated therein.

After all of the flavour has been added to the liquid xylitol, the flavour composite may be recovered.

The exact procedure of the recovery of the flavour composite may vary, depending upon its contemplated end use. Thus, in one embodiment, the flavour composite, while still liquid, may be cast upon a flat surface, to form a sheet of material. In commercial processes, casting may be performed against a moving surface, in which case the material will solidify during its travel and form a continuous sheet. Alternatively the liquid may be cast into individual trays, so that separate sheets will form.

It should be noted at this point, that the recovery process is predicated upon the tendency of xylitol to form a crystalline solid at or about its melting point. Thus, as soon as the addition of the flavour under turbulence is complete, and turbulence is supended, the xylitol will immediately commence the formation of crystals, and will solidify, usually within minutes.

In addition to the recovery of the flavour composite in sheet form, the mixture of xylitol and flavour may be cast into appropriate moulds to form droplets or tablets which, when fully hardened, may be consumed individually as a sugar candy, or may be incorporated into other composite candy products.

In another embodiment, the sheets of the flavour composite may be granulated by conventional means to form particles or beads, that may be incorporated into a variety of products as the flavouring component. For example, chewing gums may utilize as the flavour component, a quantity of these beads, in place of conventional flavours, or in combination therewith. Thus, for example, beads or particles of the present composite may be used in combination with flavour additives in powdered or liquid form, or both, to provide a composite flavour sensation. The flavour composites of the invention provide prolonged flavour sensation and release, and could thereby be used in cooperation with the same or different flavours within a given product, to provide a continuous flavour release extending over an increased time span.

The flavour composites of the present invention possess a wide variety of applications, and may be incorporated with other ingredients in, for example, a candy, or used as the flavour component of a chewing gum, or as the flavour component of another comestible product. The flavour composite may be easily and inexpensively prepared, and exhibits improved shelf stability. Also, the crystalline xylitol provides a favourable modification to the flavour, in that the flavour offers a cooling sensation to the user. This is particularly advantageous in the instance where the flavour composite is prepared with essential oil flavours such as spearmint, peppermint and the like. The flavour composites of the present invention are useful in a variety of comestible products, in addition to their preparation as sugarless candies, and as the flavour constituent of chewing gums. Thus, for example, the present composites may be utilized to provide both flavour and sweetness to foods such as breakfast cereals, dairy product analog toppings, flavoured fillings for baked goods, and the like.

Of the flavours with which the present flavour composites may be prepared, those flavours deriving from the essence of mint oils, are of note. In the instance where flavours such as peppermint, spearmint, and the like are prepared in accordance with the present invention, the resulting flavour composite yields a particularly cooling taste sensation that enhances the already crisp sensation received from the primary flavour alone. Naturally, the taste sensation of all flavours incorporated in the present composites is similarly affected, but the sensation is most pronounced in the instance of the formerly mentioned flavours. The cooling effect is attributable to the presence of xylitol in the solid, crystalline form, as the cooling sensation is absent from liquid xylitol. The flavour enhancement thus received is a further feature and benefit of the flavour composites of the present invention.

The present invention will be better understood from a consideration of the following illustrative examples.

### EXAMPLE I

In this first experiment, the thermal properties of xylitol were investigated and noted. Accordingly, a quantity of xylitol was heated to 80°C, where it became a crystal clear liquid. During heating, the xylitol was frequently stirred, with occasional removal of the stirring device from the melt. Periodic removal was continued as the temperature of the melt rose, and at melt temperatures above 120°C, the xylitol remaining on the stirring device did not crystallize.

Further heating of the xylitol to a temperature in excess of 140°C, resulted in the development of a slightly brownish colour in the melt, representing slight caramelization. The melt was then cooled down to approximately 80°C, where it immediately recrystallized. Crystallization was extremely rapid, and both the mixing device and the thermometer that had been maintained in the melt, had to be chopped out of the crystallized solid.

### EXAMPLE II

A quantity of xylitol was heated as in Example I, above, and heating was continued until the melt exceeded the temperature of 230°C. The melt was observed at 140°C, and it was noted that a substantial amount of heat energy input was required to raise the melt temperature above 150°C. Continual observation of the melt revealed that, at 184°C, slight traces of water vapour were visibly emanating therefrom. Continued water vapour evolution was noted as the melt first reached 200°C, and then 230°C, however the melt did not commence boiling during this procedure.

Thereafter, the melt was cooled to 120°C, where it was subjected to mixing and aeration. The melt was observed at this time, and remained clear throughout the foregoing treatment. The xylitol was then cooled furhter to approximately 82°C, at which point, a quantity of peppermint flavour, equivalent to 10% in theoretical amount, was rapidly mixed in. Flavour flash off was observed during the mixing procedure. Thereafter, the xylitol-flavour mixture was poured into a candy tray, and solidified into a crystalline solid within one minute. The formed crystals were then gorund down in an oscillating granulator with a 14 mesh screen, to form particles, all of which passed therethrough.

### EXAMPLE III

A quantity of xylitol was heated to 230°C with water vapour evolution, and was thereafter cooled to 78°C, at which time 1% peppermint flavour was added with turbulent mixing. The resulting mixture was then cast into a plastic moulded tray in the shape of candy pellets, and the mix quickly crystallized. The pellets were sampled thereafter, and exhibited a large, cooling effect, which was judged to enhance the flavour significantly.

### EXAMPLE IV

A comparative procedure was followed, in that a quantity of xylitol was heated in accordance with the heating regime set forth in the earlier Examples, however no flavour was added, and no turbulent agitation was imposed upon the xylitol during its heating. The xylitol was cooled to 80°C, and was cast into plastic trays, however crystallization did not take place. A quantity of the originally heated xylitol was retained in the heating container, and was thereafter subjected to turbulent mixing, whereupon

it did crystallize. Further, taste testing of the uncrystallized xylitol revealed that its flavour was closer to corn syrup, and that no cooling effect was observed, as with the crystalline form.

## EXAMPLES V AND VI

Additional xylitol-flavour mixtures were prepared with peppermint flavour, in the same manner outlined with respect to Example III, above. In Example V, 0.50% flavour was added, while in Example VI, 0.25% flavour was utilized. Both of the mixtures were cast into candy pellets, and exhibited the same characteristics observed with the candy pellets of Example III.

## EXAMPLE VII

A batch of cinnamon encapsulated xylitol candy was prepared utilizing 99.75% xylitol and 0.25% cinnamon flavour. This batch was heated to 140°C, and thereafter cooled to 84°C, whereupon the flavour was added with vigorous mixing, and the resulting mixture was then cast into the shape of tablets in a plastic candy tray. The initial cast material, however, did not crystallize as was previously observed and noted. Approximately 60 hours after the initial casting was performed, the respective samples had not yet crystallized, and sample tasting of the castings revealed that the cooling effect of the crystallized form was absent. The samples were thereafter transferred to sample jars, and shortly thereafter crystallization commenced. During crystallization, the sample jars were observed, and were found to be very hot. It was thereby determined that the crystallization is an exothermic reaction; the temperature of the uncrystallized mixture was measured at 23°C, while the temperature of the crystallizing mixture was measured at 48°C.

Upon completion of crystallization in the sample jars, the resulting product was removed and tasted, and yielded the same cooling effect observed with

0076115

earlier formulation.

## EXAMPLE VIII

Two batches of candies were prepared for gas chromatographic analysis, to determine shelf life. One batch was prepared with peppermint flavour, while the second was prepared with spearmint. Preparation of both batches was in accordance with the procedures set forth in the previous Examples. Each of the formulations was divided into three sub-batches, which were stored under differing conditions; a first batch was stored in an open jar, a second batch was stored in a closed jar, and a third batch was stored in a plastic bag. Each of the batches were separated into twelve separate samples, with four samples stored in each of the three manners set forth above. Gas chromatographic analysis was made of a sample representing each of the manners of storage of the sample representing each of the manners of storage of the batches, at each of four intervals; an initial analysis was performed at the commencement of storage, and subsequent analyses were performed. The results of this experiment are set forth in Table I, below.

## TABLE I

### FLAVOUR CONTENT (%)

| SAMPLE FLAVOUR | MANNER OF STORAGE | INITIAL | 5 WEEKS | 8 WEEKS | 12 WEEKS |
|---|---|---|---|---|---|
| PEPPERMINT | OPEN JAR | 0.220 | 0.122 | 0.117 | 0.134 |
| PEPPERMINT | CLOSED JAR | 0.214 | 0.218 | 0.208 | 0.192 |
| PEPPERMINT | CLEAR PLASTIC BAG | 0.147 | 0.138 | 0.120 | 0.137 |
| SPEARMINT | OPEN JAR | 0.159 | 0.107 | 0.114 | 0.117 |
| SPEARMINT | CLOSED JAR | 0.161 | 0.119 | 0.125 | 0.122 |
| SPEARMINT | CLEAR PLASTIC BAG | 0.143 | 0.110 | 0.091 | 0.114 |

It is apparent form the above that storage of the flavour composite in a closed jar minimizes the loss of flavour in storage. The data also suggests that all samples exhibited improved flavour shelf life over this extended time.

## EXAMPLE IX

Additional flavour composite samples were parepared and tested for flavour content retention over time. Table II, below, set forth the samples, identifying them by flavour, theoretical percentage of flavour content, and change in flavour content over time.

## TABLE II

|  |  | FLAVOUR CONTENT (%) | | |
|---|---|---|---|---|
| SAMPLE | FLAVOUR | THEORETICAL | INITIAL | 51 DAYS |
| 1 | OIL OF PEPPERMINT | 10.0 | 8.11 | 7.80 |
| 2 | OIL OF PEPPERMINT | 1.0 | 0.95 | 0.92 |
| 3 | OIL OF PEPPERMINT ) | | | |
|  | OIL OF LEMON ) | 0.5 | 0.38 | 0.34 |
|  | OIL OF ORANGE ) | | | |
| 4 | OIL OF PEPPERMINT ) | | | |
|  | OIL OF LEMON ) | 0.25 | 0.21 | 0.18 |
|  | OIL OF ORANGE ) | | | |
| 5 | OIL OF SPEARMINT | 0.25 | -- | 0.16 |
| 6 | IMITATION CASIA | 0.25 | -- | 0.15 |
| 7 | ORANGE OIL CALIFORNIA COLD PRESSED | 0.25 | -- | 0.12 |

Flavour composites prepared with similar compositions to those tested above, were incorporated into
the flavour ingredient of chewing gums, in an amount,
for example, of about 20% of the total flavour content,
and flavour sensation was enhanced and extended.

The data presented in Tables I and II indicates
that the flavour composites of the invention show
particular improvement in shelf stability that is
readily apparent to those knowledgeable in the food
and confection industry.  The flavour composites are
thus well suited for incorporation into products,
such as candies and chewing gums, where shelf stability
of the flavour component is of acute importance.

This invention may be embodied in other forms
or carried out in other ways without departing form
the spirit or essential characteristics thereof.
The present invention is therefore to be considered
as in all respects illustrative and not restrictive,
the scope of the invention being indicated by the
appended claims, and all changes which come within
the meaning and range of equivalency are intended
to be embraced therein.

CLAIMS

1.    A flavour composite comprising xylitol and at least one flavour.

2.    A flavour composite as claimed in claim 1, wherein the flavour is contained within said xylitol.

3.    A flavour composite as claimed in claim 1 or 2, wherein said xylitol is in crystalline, solid form.

4.    A flavour composite as claimed in claim 1, 2 or 3, wherein said flavour is in solid form.

5.    A flavour composite as claimed in claim 1, 2 or 3, wherein said flavour is in liquid form.

6.    A flavour composite as claimed in claim 1, 2, 3 or 4, wherein said flavour is selected from essential oils, synthetic fruit flavours, natural fruit flavours, bean-derived flavours, wine-derived flavours, pungent materials, and mixtures of two or more thereof.

7.    A flavour composite as claimed in claim 6, wherein said flavour is selected from cinnamon, spearmint, pepermint, birch, anise, apple, pear, peach, strawberry, apricot, orange, watermelon, banana, coffee, coacoa, curacao zin, affinin, pepper, mustard, and mixtures of two or more thereof.

8.    A flavour composite as claimed in any one of claims 1 to 7, wherein said flavour is present in an amount of up to about 30% by weight.

9.    A flavour composite as claimed in claim 8, wherein said flavour is present in an amount of from about 0.1% to about 10% by weight.

10.    A method of preparing a flavour composite which method comprises:

a) heating a quantity of xylitol to a temperature greater than 150°C;

b) cooling said xylitol to a temperature of about 80°C;

c) adding to the cooled xylitol of Step b) at least one flavour; and

  d) recovering said flavour composite.

  11. A method according ot claim 10, wherein said xylitol is heated to a temperature of from about 150°C to about 230°C.

  12. A method according to claim 10 or 11, wherein said flavour is added to said xylitol under agitation.

  13. A method according ot claim 10, 11 or 12, wherein said flavour is present in an amount of up to about 30% by weight.

  14. A method according ot claim 13, wherein said flavour is present in an amount of from about 0.1% to aobut 10% by weight.

  15. A method according to any one of claims 10 to 14, wherein said flavour composite is recovered by casting in a shallow tray to form a sheet material.

  16. A method according to any one of claims 10 to 14 wherein said flavour composite is recovered as a plurality of candy-shaped pellets.

  17. A method according to any one of claims 10 to 14, wherein said composite is recovered in particulate form.

  18. A method according to claim 17, wherein said particulate composite is incorporated into a comestible product.

  19. A method according to any one of claims 10 to 18 wherein said flavour is selected from essential oils, synthetic fruit flavours, natural fruit flavours, bean-derived flavours, wine-derived flavours, pungent materials, and mixtures of two or more thereof.

  20. A method according to claim 19, wherein said flavour is selected from cinnamon, spearmint, peppermint, birch, anise, apple, pear, peach, strawberry, apricot, orange, watermelon, banana, coffee, cocoa, curacao zin, affinin, pepper, mustard, and mixtures of two or more thereof.